# FASCICULE DE BREVET EUROPEEN

(11) **EP 0 913 561 B1**
(45) Date de publication et mention de la délivrance du brevet: **20.08.2003**
(21) Numéro de dépôt: 98120180.9
(22) Date de dépôt: 29.10.1998
(51) Int. Cl.: F01N 3/20, F02M 25/07, F01N 5/02

(54) **Ligne d'échappement et de recirculation des gaz pour moteur de véhicule automobile**
Auspuff- und Abgasrückführungsleitung einer Brennkraftmaschine
Exhaust and recirculation line of the exhaust gas of an internal combustion engine

(30) Priorité: 31.10.1997 FR 9713722
(43) Date de publication de la demande: 06.05.1999
(73) Titulaire: VALEO THERMIQUE MOTEUR S.A., 78321 La Verrière (FR)
(72) Inventeur: Perset, Denis, 75015 Paris (FR); Bauerlein, Thomas, 75087 Stuttgart (DE)
(74) Mandataire: Rolland, Jean-Christophe

(56) Documents cités:
- DE-A- 19 507 977
- US-A- 3 757 521
- US-A- 3 808 805
- US-A- 5 155 994
- US-A- 5 205 265
- PATENT ABSTRACTS OF JAPAN vol. 013, no. 025 (M-787), 20 janvier 1989 (1989-01-20) & JP 63 235616 A (TOYOTA MOTOR CORP), 30 septembre 1988 (1988-09-30)
- PATENT ABSTRACTS OF JAPAN vol. 008, no. 108 (M-297), 19 mai 1984 (1984-05-19) & JP 59 018009 A (TOYO KOGYO KK), 30 janvier 1984 (1984-01-30)
- PATENT ABSTRACTS OF JAPAN vol. 008, no. 120 (M-300), 6 juin 1984 (1984-06-06) & JP 59 026314 A (TOYO KOGYO KK), 10 février 1984 (1984-02-10)

## Description

La présente invention concerne une ligne d'échappement et de recirculation des gaz pour moteur à combustion interne de véhicule automobile, et plus particulièrement une telle ligne comprenant un pot catalytique, des moyens de recyclage des gaz d'échappement, et des moyens de récupération de chaleur sur les gaz d'échappement. Une telle ligne d'échappement est connue par US-A-3 808 805.

On connaît en premier lieu des systèmes de récupération de chaleur sur les gaz d'échappement.

Le principe de fonctionnement de ces systèmes consiste, en phase de démarrage à froid, à dériver les gaz d'échappement vers un échangeur de chaleur puis sur un dispositif de restriction de débit qui provoque une contre-pression à l'échappement. La contre-pression provoque une élévation de la température d'échappement et permet donc de récupérer davantage de chaleur dans l'échangeur.

Un tel système est particulièrement utile dans les moteurs suralimentés à injection directe, dans les moteurs à essence à injection directe, ou encore dans les moteurs à essence à mélange pauvre. On constate en effet, dans tous les cas précités, que la chaleur récupérée sur le moteur est insuffisante pour assurer un chauffage convenable de l'habitacle.

On sait par ailleurs que, sur un certain nombre de moteurs à combustion interne, en particulier sur les moteurs diesel suralimentés à injection directe, les normes de pollution imposent un recyclage des gaz d'échappement (EGR : Exhaust Gas Recirculation). La sévérité des normes à venir va de plus nécessiter le refroidissement de ces gaz d'échappement recyclés.

De façon typique, un circuit de recyclage des gaz d'échappement comporte une canalisation de recyclage sur laquelle est installée une vanne d'EGR et un échangeur de chaleur.

Par ailleurs, on a tendance à rapprocher de plus en plus le pot catalytique du collecteur d'échappement dans les véhicules automobiles afin d'améliorer l'amorçage du pot catalytique. On sait en effet que ce dernier ne fonctionne convenablement qu'à chaud et l'on a donc intérêt à raccourcir au maximum sa montée en température.

Toutefois, lorsque le moteur est en charge élevée, par exemple sur autoroute, le pot catalytique est soumis à des températures permanentes elles-mêmes très élevées qui réduisent sa durée de vie par transformation irréversible de l'alumine sur laquelle sont déposés les métaux nobles. Il est donc souhaitable, dans de telles phases de charge élevée du moteur, de pouvoir assurer un refroidissement des gaz d'échappement afin d'augmenter la durée de vie du catalyseur.

Enfin, de façon à obtenir des émissions de gaz d'échappement moins polluantes, il est souhaitable de pouvoir piloter la température de ces gaz pour améliorer l'efficacité des pots catalytiques.

La présente invention vise à résoudre les problèmes précités à l'aide d'une ligne d'échappement et de recirculation des gaz relativement simple et qui, en particulier, ne comporte qu'un seul échangeur de chaleur.

A cet effet, l'invention a pour objet une ligne d'échappement et de recirculation des gaz pour moteurs à combustion interne, notamment de véhicules automobiles comprenant un pot catalytique, des moyens de recyclage des gaz d'échappement et des moyens de récupération de chaleur sur les gaz d'échappement, caractérisée par le fait qu'elle comprend :
- disposé entre le moteur et le pot catalytique, un échangeur de chaleur entre les gaz d'échappement et un fluide de refroidissement, en série avec des moyens de restriction pour créer une contre-pression, ledit échangeur de chaleur étant en amont desdits moyens de restriction ;
- une dérivation dudit échangeur et des moyens de sélection pour sélectivement diriger les gaz d'échappement en totalité ou en partie dans la dérivation ou dans l'échangeur ;
- une canalisation de recyclage des gaz d'échappement connectée à une de ses extrémités entre l'échangeur et les moyens de restriction et, à son autre extrémité, à une canalisation d'admission d'air dans le moteur ;
- des moyens de réglage sur ladite canalisation de recyclage de la proportion de gaz d'échappement recyclés.

On verra ci-après qu'en fonction de l'état des moyens de sélection et des moyens de réglage précités ainsi, éventuellement, que de l'état des moyens de restriction, l'échangeur monté tel que précisé ci-dessus, permet d'assurer les trois fonctions indiquées. Il permet en effet le refroidissement des gaz d'échappement recyclés, la récupération de l'énergie thermique des gaz d'échappement pour le chauffage additionnel de l'habitacle, ainsi que la protection du catalyseur contre des températures d'échappement trop élevées.

On verra également ci-après que lesdits moyens de restriction peuvent être soit fixes, soit comprendre une vanne d'ouverture réglable.

Dans ce dernier cas, on prévoit de préférence des moyens de commande agencés pour commander les moyens de restriction en position fermée dans un mode de fonctionnement normal et en position ouverte dans un mode de pleine charge.

Dans un mode de réalisation préféré, lesdits moyens de commande sont agencés pour commander les moyens de réglage à fermer la canalisation de recyclage et les moyens de sélection à diriger les gaz d'échappement à travers l'échangeur de chaleur et les moyens de restriction, dans un mode de démarrage à froid, et pour commander les moyens de réglage à laisser recycler une proportion déterminée de gaz d'échappement et les moyens de sélection à diriger le reste des gaz d'échappement à travers la dérivation en mode de fonctionnement normal.

En outre, dans un mode de réalisation particulier, lesdits moyens de commande sont agencés pour commander les moyens de réglage à fermer la canalisation de recyclage et les moyens de restriction à diriger les gaz d'échappement à travers l'échangeur en mode de pleine charge.

On décrira maintenant, à titre d'exemple non limitatif, un mode de réalisation particulier de l'invention, en référence aux dessins schématiques annexés dans lesquels :

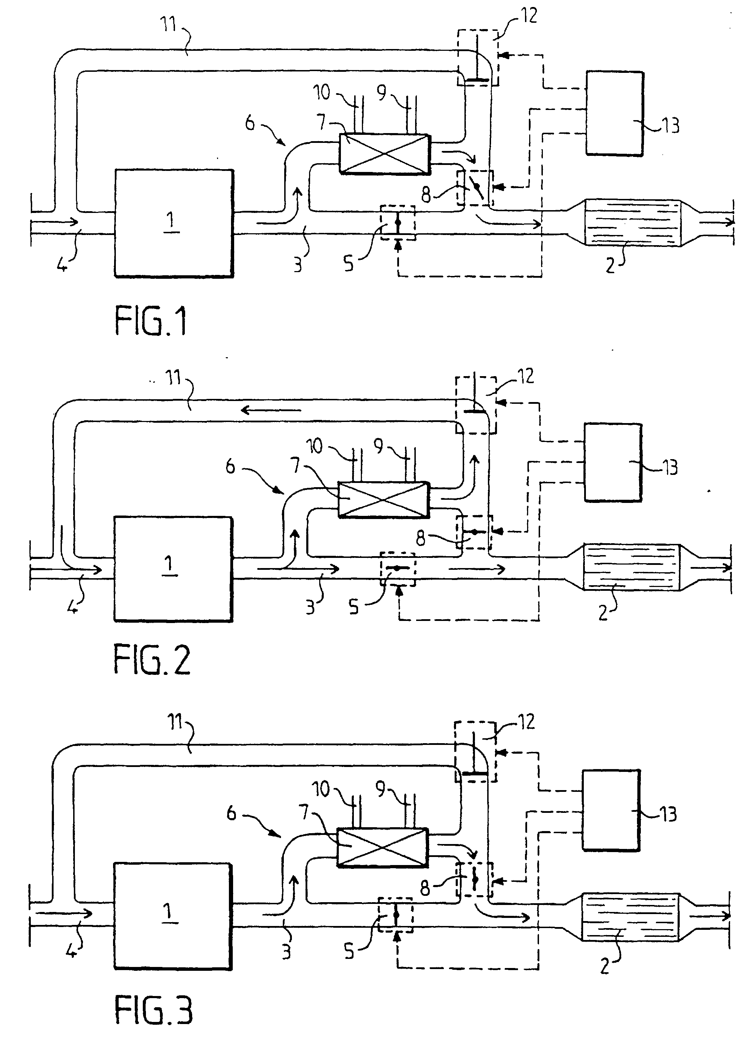

- les figures 1, 2 et 3 représentent une ligne d'échappement et de recirculation des gaz selon l'invention, respectivement en mode de démarrage à froid, en mode de fonctionnement normal et en mode de pleine charge.

On voit sur les figures un moteur thermique 1 à combustion interne, par exemple un moteur diesel ou essence à injection directe, équipé d'un pot d'échappement catalytique 2. Une canalisation 3 relie le collecteur d'échappement du moteur 1 à l'entrée du pot catalytique 2. Par ailleurs, une canalisation 4 relie le filtre à air (non représenté) à la tubulure d'admission d'air dans le moteur.

Une vanne 5, ici une vanne papillon, est interposée sur la canalisation 3. Une dérivation 6 est connectée à la canalisation 3 de part et d'autre de la vanne 5.

Un échangeur de chaleur 7 et une vanne 8, également ici du type vanne à papillon, sont disposés en série sur la dérivation 6, l'échangeur de chaleur 7 en amont de la vanne 8 dans le sens d'écoulement des gaz d'échappement. L'échangeur de chaleur 7 est ici un échangeur gaz/eau, le fluide de refroidissement n'étant autre que le liquide de refroidissement du moteur utilisé par ailleurs dans un autre échangeur de chaleur eau/air, en vue du chauffage de l'habitacle du véhicule. On voit sur les figures les conduits 9 et 10 d'entrée et de sortie du liquide de refroidissement dans l'échangeur 7.

Une canalisation 11 de recyclage des gaz d'échappement est susceptible de prélever ces gaz sur la dérivation 6 entre la sortie de l'échangeur de chaleur 7 et la vanne 8, pour les ramener à la canalisation 4 d'admission d'air dans le moteur. Une vanne 12, représentée ici sous la forme d'une vanne à soupape, dite vanne d'EGR, est disposée sur la canalisation de recyclage 11.

Enfin, une électronique de commande 13 recevant de façon connue des informations d'un certain nombre de capteurs assure le pilotage des vannes 5, 8 et 12 en fonction du mode de fonctionnement du moteur 1.
- La figure 1 représente la configuration du dispositif en mode de démarrage à froid.

Dans ce mode, la vanne d'EGR 12 est fermée. Le recyclage des gaz d'échappement est en effet inutile dans cette phase car la formation des oxydes d'azote Nox est faible lorsque le moteur est froid. Par ailleurs, la vanne 5 de dérivation des gaz d'échappement est fermée, de sorte que ces gaz empruntent la dérivation 6.

Dans cette dérivation, les gaz s'échappent par la vanne 8 qui provoque une contre-pression à l'échappement. En conséquence, la température des gaz d'échappement est augmentée et l'échangeur 7 récupère plus de chaleur.

La chaleur ainsi récupérée permet, par l'intermédiaire du fluide de refroidissement de l'échangeur de chaleur 7, dans un premier temps d'accélérer la mise en température du moteur, puis, de chauffer l'habitacle.
- La figure 2 représente le mode de fonctionnement normal du moteur.

Dans ce mode, la vanne 5 de dérivation des gaz d'échappement est ouverte, permettant ainsi un transfert direct de ces gaz vers le pot catalytique 2. Par ailleurs, la vanne 8 de contre-pression est fermée.

En ce qui concerne la vanne d'EGR 12, elle est ouverte en fonction du taux de recyclage déterminé par l'électronique de commande 13. Par conséquent, l'échappement se fait directement par la canalisation 3, à l'exception de la proportion de gaz recyclé par l'intermédiaire de la canalisation 11.
- Enfin, la figure 3 illustre la configuration du dispositif dans le mode de pleine charge correspondant, par exemple, à une grande vitesse sur autoroute. Dans ce mode, la température des gaz d'échappement est très élevée et il est important d'éviter qu'elle ne dépasse les conditions d'utilisation du pot catalytique 2. Par ailleurs, de même qu'à froid, on ne recycle pas de gaz d'échappement à pleine charge.

En conséquence, dans ce mode de fonctionnement, la vanne d'EGR 12 est fermée, de même que la vanne de dérivation 5 des gaz d'échappement. En revanche, la vanne 8 de contre-pression est totalement ouverte.

Ainsi, tous les gaz d'échappement traversent l'échangeur de chaleur 7 où ils sont refroidis avant de pénétrer dans le pot catalytique 2.

On observera que la vanne 8 de contre-pression pourrait être remplacée par une simple restriction fixe. Son effet serait sensiblement le même que celui de la vanne 8 dans le mode de démarrage à froid de la figure 1. Il serait en revanche dégradé, dans le mode de fonctionnement normal de la figure 2 et surtout dans le mode de pleine charge de la figure 3. Un tel remplacement permettrait toutefois de réduire les coûts du système.

## Revendications

1. Ligne d'échappement et de recirculation des gaz, notamment pour moteur (1) à combustion interne de véhicule automobile, comprenant un pot catalytique (2), des moyens (11,12) de recyclage des gaz d'échappement, et des moyens (7) de récupération de chaleur sur les gaz d'échappement, **caractérisée par le fait qu'**elle comprend :
- disposé entre le moteur et le pot catalytique, un échangeur de chaleur (7) entre les gaz d'échappement et un fluide de refroidissement, en série avec des moyens de restriction (8) pour créer une contre-pression, ledit échangeur de chaleur étant en amont desdits moyens de restriction ;
- une dérivation dudit échangeur et desdits moyens de restriction et des moyens de sélection (5) pour sélectivement diriger les gaz d'échappement en totalité ou en partie dans. la dérivation ou dans l'échangeur ;
- une canalisation de recyclage (11) des gaz d'échappement, connectée à une de ses extrémités entre l'échangeur (7) et les moyens de restriction (8) et, à son autre extrémité, à une canalisation (4) d'admission d'air dans le moteur; et
- des moyens de réglage (12) sur ladite canalisation de recyclage de la proportion des gaz d'échappement recyclés.

2. Ligne d'échappement et de recirculation des gaz selon la revendication 1, dans laquelle lesdits moyens de restriction (8) sont fixes.

3. Ligne d'échappement et de recirculation des gaz selon la revendication 1, dans laquelle lesdits moyens de restriction (8) comprennent une vanne d'ouverture réglable.

4. Ligne d'échappement et de recirculation des gaz selon la revendication 3, comprenant des moyens de commande (13) agencés pour commander les moyens de restriction (8) en position fermée dans un mode de fonctionnement normal et en position ouverte dans un mode de pleine charge.

5. Ligne d'échappement et de recirculation des gaz selon l'une quelconque des revendications 1 à 4, dans laquelle lesdits moyens de commande (13) sont agencés pour commander les moyens de réglage (12) à fermer la canalisation de recyclage (11) et les moyens de sélection (5) à diriger les gaz d'échappement à travers l'échangeur de chaleur (7) et les moyens de restriction (8), dans un mode de démarrage à froid, et pour commander les moyens de réglage (12) à laisser recycler une proportion déterminée de gaz d'échappement et les moyens de sélection (5) à diriger le restez des gaz d'échappement à travers la dérivation, en mode de fonctionnement normal.

6. Ligne d'échappement et de recirculation des gaz selon l'une quelconque des revendications 4 et 5, dans laquelle lesdits moyens de commande (13) sont agencés pour commander les moyens de réglage (12) à fermer la canalisation de recyclage (11) et les moyens de sélection (5) à diriger les gaz d'échappement à travers l'échangeur (7) en mode de pleine charge.

## Patentansprüche

1. Abgas- und Gasrückführleitung, insbesondere für einen Verbrennungskraftmotor (1) eines Kraftfahrzeugs, mit einem Katalysatortopf (2), Mitteln (11, 12) zur Rückführung der Abgase und Mitteln (7) zur Wärmerückgewinnung aus den Abgasen, **dadurch gekennzeichnet, dass** sie folgendes umfasst:
- einen Wärmetauscher (7) zum Austauschen von Wärme zwischen den Abgasen und einem Kühlfluid, der zwischen dem Motor und dem Katalysatortopf in Reihe mit Verengungsmitteln (8) zur Erzeugung eines Gegendrucks angeordnet ist, wobei der Wärmetauscher stromaufwärts von den Verengungsmitteln liegt,
- eine Umgehung des Wärmetauschers und der Verengungsmittel und Auswahlmittel (5) zum selektiven Lenken der Abgase insgesamt oder teilweise in die Umgehung oder in den Wärmetauscher,
- eine Rückführleitung (11) für Abgase, die an einem ihrer Enden zwischen dem Wärmetauscher (7) und den Verengungsmitteln (8) und an ihrem anderen Ende an eine Leitung (4) zur Zufuhr von Luft in den Motor angeschlossen ist, und
- Mittel (12) zum Einstellen des Anteils der zurückgeführten Abgase in der Rückführleitung.

2. Abgas- und Gasrückführleitung nach Anspruch 1, bei der die Verengungsmittel (8) unveränderlich sind.

3. Abgas- und Gasrückführleitung nach Anspruch 1, bei der die Verengungsmittel (8) ein einstellbares Öffnungsventil umfassen.

4. Abgas- und Gasrückführleitung nach Anspruch 3 mit Steuermitteln (13), die dafür ausgelegt sind, die Verengungsmittel (8) in einem Normalbetriebsmodus in eine geschlossene Position zu steuern und in einem Volllastmodus in eine offene Position zu steuern.

5. Abgas- und Gasrückführleitung nach einem der Ansprüche 1 bis 4, bei der die Steuermittel (13) dafür ausgelegt sind, in einem Kaltstartmodus die Einstellmittel (12) so zu steuern, dass sie die Rückführleitung (11) schließen, und die Auswahlmittel (5) so, dass sie die Abgase durch den Wärmetauscher (7) und die Verengungsmittel (8) lenken, und dass sie in einem Normalbetriebsmodus die Einstellmittel (12) so betätigen, dass sie einen vorbestimmten Teil der Abgase zurückströmen lassen, und die Auswahlmittel (5) so, dass sie den Rest der Abgase durch die Umgehung lenken.

6. Abgas- und Gasrückführleitung nach einem der Ansprüche 4 und 5, bei der die Steuermittel (13) dafür ausgelegt sind, bei Volllast die Einstellmittel (12) so zu steuern, dass sie die Rückführleitung (11) schließen, und die Auswahlmittel (5) so, dass sie die Abgase durch den Wärmetauscher (7) lenken.

## Claims

1. Gas exhaust and recirculation line particularly for an internal combustion engine (1) of a motor vehicle, comprising a catalytic converter (2), means (11, 12) for recirculating the exhaust gases, and means (7) for recuperating heat from the exhaust gases, **characterized in that** it comprises:
- arranged between the engine and the catalytic converter, a heat exchanger (7) for the exchange of heat between the exhaust gases and a cooling fluid, in series with restricting means (8) to create a back pressure, the said heat exchanger being upstream of the said restricting means;
- a diversion from the said exchanger and the said restricting means and selection means (5) for selectively directing the exhaust gases wholly or in part into the diversion or into the exchanger;
- an exhaust gas recirculation pipe (11) connected at one of its ends between the exchanger (7) and the restricting means (8) and, at its other end, to a pipe (4) letting air into the engine; and
- adjusting means (12) on the said recirculation pipe for adjusting the proportion of exhaust gases recirculated.

2. Gas exhaust and recirculation line according to Claim 1, in which the said restricting means (8) are fixed.

3. Gas exhaust and recirculation line according to Claim 1, in which the said restricting means (8) comprise a valve the opening of which can be adjusted.

4. Gas exhaust and recirculation line according to Claim 3, comprising control means (13) designed to command the restricting means (8) into a closed position in a normal mode of operation and into an open position in a full-load mode.

5. Gas exhaust and recirculation line according to any one of Claims 1 to 4, in which the said control means (13) are designed to command the adjusting means (12) to close the recirculation pipe (11) and the selection means (5) to direct the exhaust gases through the heat exchanger (7) and the restricting means (8), in a cold-start mode, and to command the adjusting means (12) to allow a determined proportion of exhaust gases to be recirculated and the selection means (5) to direct the remainder of the exhaust gases through the diversion, in normal operating mode.

6. Gas exhaust and recirculation line according to either one of Claims 4 and 5, in which the said control means (13) are designed to command the adjusting means (12) to close the recirculation pipe (11) and the selection means (5) to direct the exhaust gases through the exchanger (7) in full load mode.
